# EUROPEAN PATENT APPLICATION

(11) **EP 4 173 717 A1**
(43) Date of publication of application: **03.05.2023**
(21) Application number: 22825400.9
(22) Date of filing: 20.06.2022
(51) Int. Cl.: B02C 18/00, B02C 18/22, B02C 18/14, B02C 18/24, C08J 3/12, C08J 3/24, C08F 2/01, B29B 9/12

(54) **MICRONIZING APPARATUS FOR HYDROGEL OF SUPER ABSORBENT POLYMER**

(30) Priority: 18.06.2021 KR 20210079644; 21.06.2021 KR 20210080345
(71) Applicant: Lg Chem, Ltd., Seoul 07336 (KR)
(72) Inventor: CHUNG, Ui Seok, Daejeon 34122 (KR); MIN, Yoon Jae, Daejeon 34122 (KR); KIM, Gicheul, Daejeon 34122 (KR); KIM, Tae Yun, Daejeon 34122 (KR); WOO, Heechang, Daejeon 34122 (KR); HAN, Sangwon, Daejeon 34122 (KR)
(74) Representative: Goddar, Heinz J.
(86) International application number: PCT/KR2022/008727
(87) International publication number: WO 2022/265477

(57) **Abstract**

A micronizing apparatus for hydrogel of super absorbent polymer is disclosed. The micronizing apparatus may include: a body having a transfer space where hydrogel is transferred, and a discharge space where ground hydrogel is discharged formed inside the body; a first rotation shaft rotatably disposed in the transfer space, wherein at least one screw is formed on an outer perimeter surface to transfer the hydrogel along a longitudinal direction of the body; a hole plate fixedly installed in the body and having a plurality of through holes formed in the hole plate; a cutter that is spaced from the hole plate by a predetermined gap, and is rotatably disposed in the body so as to grind the hydrogel transferred by the screw; and a second rotation shaft that is rotatably disposed in the discharge space, and connected to the cutter to rotate the cutter, wherein a rotation speed of the first rotation shaft and a rotation speed of the second rotation shaft may be independently controlled.

## Description

### [TECHNICAL FIELD]

### Cross-reference to Related Application(s)

This application claims the benefit of Korean Patent Application No. 10-10-2021-0079644 filed on June 18, 2021, Korean Patent Application No. 10-2021-0080345 filed on June 21, 2021, and Korean Patent Application No. 10-2022-0074877 filed on June 20, 2022 with the Korean Intellectual Property Office, the disclosures of which are herein incorporated by reference in their entirety.

This invention relates to a micronizing apparatus for hydrogel of super absorbent polymer, and more specifically, a micronizing apparatus for hydrogel of super absorbent polymer that can minimize damage of hydrogel particles due to aggregation, and simultaneously, miniaturize the particles, by independently controlling the transfer speed of hydrogel to a cutting part and the discharge speed of ground hydrogel from the cutting part.

### [BACKGROUND]

Super absorbent polymer (SAP) is polymer material in the form of white powder prepared by reacting acrylic acid with caustic soda, and it can absorb moisture of about five hundred to thousand times of its own weight. The super absorbent polymer is synthetic polymer material that is transformed to a jelly-like form, if it absorbs water, and can store water without discharging, even if a certain degree of pressure is applied from the outside.

Super absorbent polymer molecules have a network structure, and due to many pores between the molecules, easily absorb water. Due to concentration difference between ions in the super absorbent polymer and water, water moves inside super absorbent polymer (by osmosis). If water molecules are introduced into super absorbent polymer, anions fixed inside try to occupy a specific space by repulsive force, and thus, the space of polymer chains expands and more water can be absorbed (electrostatic repulsion).

Such super absorbent polymer began to be commercialized as sanitary items, and currently, is being widely used as water-holding material for soil, water stop material for civil engineering and architecture, sheets for raising seedling, freshness preservatives in the field of food circulation, fomentation material, and the like, besides hygiene products such as paper diapers for children, and the like.

Super absorbent polymer is marketed as powder products after drying and grinding hydrogel or hydrogel polymer obtained through a polymerization reaction. In order to effectively progress such a drying process, it is important to increase the surface area of hydrogel polymer as much as possible. Thus, in order to increase the surface area of hydrogel polymer as much as possible before the drying process, a method of grinding hydrogel polymer polymerized through thermal polymerization or photo polymerization to increase the surface area of hydrogel polymer may be considered. A such, in order to increase the surface area of hydrogel polymer, a process wherein hydrogel polymer is polymerized, and then, is first ground, has been disclosed.

For the first grinding process of hydrogel, a chopper is mainly used.

Such a chopper comprises a screw for moving hydrogel, a cutter for cutting hydrogel, and a hole plate where cut hydrogel polymer is discharged. According to the conventional chopper, the screw and cutter are connected to one motor and rotate at the same speeds.

In order to make hydrogel particles smaller or increase sphericity of hydrogel particles, the number of collisions between hydrogel and cutter should be increased, and for this purpose, the rotation speed of cutter should be increased. However, even if the rotation speed of cutter is increased to increase the number of collisions between hydrogel and cutter, the speed of hydrogel discharged from the cutting part in the chopper does not increase as much as the increase in the rotation speed. Namely, although the transfer speed of hydrogel introduced in the cutting part increases in proportion to increase in the rotation speed of a screw, the discharge speed of hydrogel discharged from the cutting part does not increase in proportion to the increase in the rotation speed, and thus, hydrogel is accumulated in the cutting part. If hydrogel continues to be accumulated in the cutting part, strong pressure is applied to the cutting part. Thus, damage to hydrogel particles increases, and thus, extractable contents (E/C) of particles may increase, and vortex may become slow due to the aggregation of the particles.

The background part has been described for better understanding of the background of the invention, and may comprise information other than the prior art, already known to one of ordinary knowledge in the art.

### [DETAILED DESCRIPTION OF THE INVENTION]

### [Technical Problem]

It is an object of the invention to provide a micronizing apparatus for hydrogel of super absorbent polymer that can minimize damage of hydrogel particles due to aggregation, and simultaneously, miniaturize the particles, by independently controlling the transfer speed of hydrogel to a cutting part and the discharge speed of ground hydrogel from the cutting part.

### [Technical Solution]

A micronizing apparatus for hydrogel of super absorbent polymer according to one embodiment of the invention may include: a body having a transfer space where hydrogel is transferred, and a discharge space where ground hydrogel is discharged formed inside the body; a first rotation shaft rotatably disposed in the transfer space, wherein at least one screw is formed on an outer perimeter surface to transfer the hydrogel along a longitudinal direction of the body; a hole plate fixedly installed in the body and having a plurality of through holes formed in the hole plate; a cutter that is spaced from the hole plate by a predetermined gap, and is rotatably disposed in the body so as to grind the hydrogel transferred by the screw; and a second rotation shaft that is rotatably disposed in the discharge space, and connected to the cutter to rotate the cutter, wherein a rotation speed of the first rotation shaft and a rotation speed of the second rotation shaft may be independently controlled.

The micronizing apparatus may further include: a first driving motor transferring driving force to the first rotation shaft; and a second driving motor transferring driving force to the second rotation shaft.

The first driving motor may be disposed at one side in the longitudinal direction of the body, and the first rotation shaft may penetrate one side surface of the body and be connected to the first driving motor; and the second driving motor may be disposed at the other side in the longitudinal direction of the body, and the second rotation shaft may penetrate the other side surface of the body and be connected to the second driving motor.

The cutter may be disposed at one side in the longitudinal direction of the hole plate, and one end of the second rotation shaft may penetrate the hole plate and be connected to the cutter.

The rotation speed of the second rotation shaft may be faster than the rotation speed of the first rotation shaft.

The micronizing apparatus may further include: an inlet that is formed at an upper part of one side in the longitudinal direction of the body, and connected to the transfer space, wherein the hydrogel is introduced into the inlet; and an outlet that is formed at a lower part of the other side in the longitudinal direction of the body, and connected to the discharge space, wherein the hydrogel is discharged from the outlet.

The transfer space may be formed at one side part in the longitudinal direction of the body, the discharge space may be formed at the other side part in the longitudinal direction of the body, and the cutter and the hole plate may define a boundary between the transfer space and the discharge space.

### [ADVANTAGEOUS EFFECTS]

According to the embodiment of the invention, by varying the rotation speed of a cutter and the rotation speed of a screw, damage of hydrogel particles due to aggregation may be minimized, and simultaneously, hydrogel particles may be miniaturized.

Namely, by controlling the rotation speed of a cutter to be fast and controlling the rotation speed of a screw to be slow, accumulation of hydrogel in the cutting part may be prevented, thus lowering pressure applied to the cutting part, thereby inhibiting aggregation of hydrogel particles, and increasing only the number of collisions between hydrogel and cutter.

And, since hydrogel particles may be miniaturized, the subsequent grinding process may be omitted, and slowing of vortex may be prevented.

Besides, effects that can be obtained or expected from the embodiments of the invention will be directly disclosed or suggested in the detailed explanations of the embodiments of the invention. Namely, various effects expected according to the embodiments of the invention will be disclosed in the detailed description described later.

### [BRIEF DESCRIPTION OF THE DRAWINGS]

The embodiments of the invention will be better understood referring to the explanations below in relation to attached drawings where similar numeral references indicate identical or functionally similar elements.
Fig. 1 is a perspective view of the micronizing apparatus for hydrogel of super absorbent polymer according to embodiment of the invention.
Fig. 2 is a cross sectional view of the micronizing apparatus for hydrogel of super absorbent polymer according to embodiment of the invention.

It should be understood that the drawings referred to above are not necessarily drawn to scale, and present simple expressions of various preferred characteristics illustrating the basic principle of the invention. For example, specific design characteristics comprising specific dimensions, directions, locations and shapes will be partly determined by specifically intended application and use environments.

### [DETAILED DESCRIPTION OF THE EMBODIMENTS]

The terms used herein are only to explain specific embodiments, and are not intended to limit the invention. A singular expression includes a plural expression thereof, unless it is expressly stated or obvious from the context that such is not intended. As used herein, the terms "include" , "including" , "comprise" , "comprising" , "contains" , "containing" , etc. are intended to designate the existence of practiced characteristic, number, step, constructional element or combinations thereof, and they are not intended to preclude the possibility of existence or addition of one or more other characteristics, numbers, steps, constructional elements or combinations thereof. As used herein, the term "and/or" includes one of enumerated items in connection, or all the combinations.

As used herein, the term "polymer" means a polymerized state of water soluble ethylenically unsaturated monomers, and it may include those of all moisture content ranges or particle diameter ranges. Among the polymers, polymer after polymerization and before drying, and having a moisture content of about 40 wt% or more, may be referred to as hydrogel polymer.

And, the term "super absorbent polymer" means the polymer or base resin itself, or is used to include the polymer or base resin made appropriate for productization through additional process, for example, surface crosslinking, fine particles reassembling, drying, grinding, classification, and the like.

And, the term "fine particles" mean particles having particle diameter less than 150 *µ*m among the super absorbent polymer particles. The particle diameter of such polymer particles may be measured according to European Disposables and Nonwovens Association (EDANA) standard EDANA WSP 220.3 method.

And, the term "chopping" means cutting hydrogel polymer to small pieces of millimeter unit so as to increase drying efficiency, and is distinguished from grinding to micrometer or normal particle level.

And, the term "micronizing" means grinding hydrogel polymer to particle diameter of tens to hundreds of micrometers, and is distinguished from "chopping".

The micronizing apparatus for hydrogel of super absorbent polymer according to embodiment of the invention independently controls a transfer speed at which hydrogel is transferred to the cutting part in the micronizing apparatus, and a discharge speed at which ground hydrogel is discharged from the cutting part, thereby minimizing damage of hydrogel particles due to aggregation, and simultaneously, miniaturizing the particles.

Hereinafter, the micronizing apparatus for hydrogel of super absorbent polymer according to embodiment of the invention will be explained in detail referring to attached drawings.

The preparation apparatus of super absorbent polymer according to embodiment of the invention comprises a polymerization reactor, a micronizing apparatus, a dryer, a grinding apparatus, and a surface crosslinking apparatus.

The polymerization reactor induces a polymerization reaction of a monomer composition in the presence of an internal crosslinking agent and a polymerization initiator to form hydrogel polymer.

The polymerization reaction is a reaction of forming hydrogel polymer, wherein a monomer composition comprising water soluble ethylenically unsaturated monomers having acid groups, an internal crosslinking agent and a polymerization initiator is subjected to polymerization, to form polymer in which the water soluble ethylenically unsaturated monomers having acid groups and internal crosslinking agent are crosslinked (step 1).

The water soluble ethylenically unsaturated monomers making up the crosslinked polymer may be any monomers commonly used in the preparation of super absorbent polymer. As non-limiting examples, the water soluble ethylenically unsaturated monomers may be a compound represented by the following Chemical Formula 1:

[Chemical Formula 1] R¹-COOM¹

In the Chemical Formula 1,
R¹ is a C2-5 alkyl group comprising unsaturated bond,
M¹ is a hydrogen atom, monovalent or divalent metal, an ammonium group or an organic amine salt.

Preferably, the monomer may be one or more selected from the group consisting of acrylic acid, methacrylic acid, and monovalent (alkali) metal salt, divalent metal salt, ammonium salt and organic amine salt of these acids. As such, in case acrylic acid and/or a salt thereof is used as water soluble ethylenically unsaturated monomers, super absorbent polymer with improved absorption property may be obtained. Besides, as the monomers, anionic monomers and salts thereof such as maleic anhydride, fumaric acid, crotonic acid, itaconic acid, 2-acryloylethane sulfonic acid 2-methacryloylethane sulfonic acid, 2-methacryloylpropane sulfonic acid, or 2-methacrylamide-2-methylpropane sulfonic acid; non-ionic hydrophilic containing monomers such as methacrylamide, N-substituted(meth)acrylate, 2-hydroxyethyl methacrylate, 2-hydroxypropyl methacrylate, methoxy polyethylene glycol methacrylate, polyethylene glycol methacrylate; and amino group containing unsaturated monomers and quarternarized products thereof, such as (N,N)-dimethylaminoethyl.

Wherein, the water soluble ethylenically unsaturated monomers have acid groups. In the conventional preparation method of super absorbent polymer, monomers in which at least a part of the acid groups had been neutralized by a neutralization agent were subjected to crosslinking polymerization to form hydrogel polymer. Specifically, in the step of mixing the water soluble ethylenically unsaturated monomers having acid groups, internal crosslinking agent, polymerization initiator and neutralization agent, at least a part of the acid groups of the water soluble ethylenically unsaturated monomers were neutralized.

However, according to one embodiment of the invention, while the acid groups of the water soluble ethylenically unsaturated monomers are not neutralized, polymerization is first conducted to form polymer.

The water soluble ethylenically unsaturated monomers (for example, acrylic acid), of which acid groups are not neutralized, are liquid and have high miscibility with a solvent (water), and thus, exist in the state of a mixed solution in the monomer composition. However, water soluble ethylenically unsaturated monomers, of which acid groups are neutralized, are solid at room temperature, and have different solubilities according to the temperature of a solvent (water), and the solubility is lower as the temperature is lower.

As such, the water soluble ethylenically unsaturated monomers (for example, acrylic acid), of which acid groups are not neutralized, have higher solubility to or miscibility with a solvent (water) than the monomers of which acid groups are neutralized, and are not precipitated even at low temperature, and thus, are favorable for polymerization for a long time at low temperature. Thus, by conducting polymerization for a long time using the water soluble ethylenically unsaturated monomers (for example, acrylic acid), of which acid groups are not neutralized, polymer having higher molecular weight and uniform molecular weight distribution may be stably formed.

And, polymer of longer chain can be formed, thus achieving the effect for reducing extractable contents that exist in non-crosslinked state due to incomplete polymerization or crosslinking.

And, as such, if polymerization is first conducted while the acid groups of the monomers are not neutralized, to form polymer, and the polymer is micronized in the presence of a surfactant after neutralization, or the acid groups existing in the polymer are neutralized simultaneously with micronization, the surfactant may exist on the surface of the polymer in large quantities, and sufficiently perform a function for lowering adhesion of polymer.

In the monomer composition, the concentration of the water soluble ethylenically unsaturated monomers may be appropriately controlled considering polymerization time and reaction conditions, and the like, and it may be controlled to about 20 to about 60 wt%, or about 40 to about 50 wt%.

As used herein the term 'internal crosslinking agent' is used to distinguish from a surface crosslinking agent for crosslinking the surface of super absorbent polymer particles described later, and it functions for introducing crosslinks between unsaturated bonds of the above explained water soluble ethylenically unsaturated monomers, to form polymer comprising a crosslink structure.

In this step, crosslinking is progressed without distinction of a surface and inside, but in case a surface crosslinking process of super absorbent polymer is progressed as described later, the surface of the finally prepared super absorbent polymer particles may comprise a structure newly crosslinked by the surface crosslinking agent, and the inside of the super absorbent polymer particles may maintain the structure crosslinked by the internal crosslinking agent.

According to one embodiment of the invention, as the internal crosslinking agent, one or more of multifunctional acrylate-based compounds, multifunctional allyl-based compounds, or multifunctional vinyl-based compounds may be used.

As non-limiting examples of the multifunctional acrylate-based compounds, ethyleneglycol dimethacrylate, diethyleneglycol dimethacrylate, triethyleneglycol dimethacrylate, tetraethyleneglycol dimethacrylate, polyethyleneglycol dimethacrylate, propyleneglycol dimethacrylate, tripropyleneglycol dimethacrylate, poly1propyleneglycol dimethacrylate, butanediol dimethacrylate, butyleneglycol dimethacrylate, hexanediol dimethacrylate, pentaerythritol dimethacrylate, pentaerythritol tri(meth)acrylate, pentaerythritol tetramethacrylate, dipentaerythritol dimethacrylate, dipentaerythritol trimethacrylate, dipentaerythritol tetra(meth)acrylate, dipentaerythritol pentamethacrylate, trimethylolpropane dimethacrylate, trimethylolpropane trimethacrylate, glycerin dimethacrylate, and glycerin trimethacrylate, and the like may be mentioned, and one of them or two or more kinds of them may be mixed and used.

As non-limiting examples of the multifunctional allyl-based compounds, ethyleneglycol diallyl ether, diethyleneglycol diallyl ether, triethyleneglycol diallyl ether, tetraethyleneglycol diallyl ether, polyethyleneglycol diallyl ether, propyleneglycol diallyl ether, tripropyleneglycol diallyl ether, polypropyleneglycol diallyl ether, butanediol diallyl ether, butyleneglycol diallyl ether, hexanediol diallyl ether, pentaerythritol diallyl ether, pentaerythritol triallyl ether, pentaerythritol tetraallyl ether, dipentaerythritol diallyl ether, dipentaerythritol triallyl ether, dipentaerythritol tetraallyl ether, dipentaerythritol pentaallyl ether, trimethylolpropane diallyl ether, trimethylolpropane triallyl ether, glycerin diallyl ether, and glycerin triallyl ether, and the like may be mentioned, and one of them or two or more kinds of them may be mixed and used.

As non-limiting examples of the multifunctional vinyl-based compounds, ethyleneglycol divinyl ether, diethyleneglycol divinyl ether, triethyleneglycol divinyl ether, tetraethyleneglycol divinyl ether, polyethyleneglycol divinyl ether, propyleneglycol divinyl ether, tripropyleneglycol divinyl ether, polypropyleneglycol divinyl ether, butanediol divinyl ether, butyleneglycol divinyl ether, hexanediol divinyl ether, pentaerythritol divinyl ether, pentaerythritol trivinyl ether, pentaerythritol tetravinyl ether, dipentaerythritol divinyl ether, dipentaerythritol trivinyl ether, dipentaerythritol tetravinyl ether, dipentaerythritol pentainyl ether, trimethylolpropane divinyl ether, trimethylolpropane trivinyl ether, glycerin divinyl ether, and glycerin trivinyl ether, and the like may be mentioned, and one of them or two or more kinds of them may be mixed and used. Preferably, pentaerythritol triallyl ether may be used.

In the above explained multifunctional allyl-based compounds, or multifunctional vinyl-based compounds, two or more unsaturated groups included in the molecule respectively bind to the unsaturated bonds of water soluble ethylenically unsaturated monomers, or unsaturated bonds of other internal crosslinking agents, thus forming a crosslink structure during the polymerization process, and unlike acrylate-based compounds comprising an ester bond(-(C=O)O-) in the molecule, the crosslink may be more stably maintained during the neutralization process after the polymerization reaction.

Thus, gel strength of prepared super absorbent polymer may increase, process stability during a discharge process after polymerization may increase, and extractable contents may be minimized.

The crosslinking polymerization of water soluble ethylenically unsaturated monomers in the presence of such an internal crosslinking agent may be conducted in the presence of a thickener, a plasticizer, a preservative, an antioxidant, and the like, as necessary.

In the monomer composition, the internal crosslinking agent may be used in an amount of 0.01 to 5 parts by weight, based on 100 parts by weight of the water soluble ethylenically unsaturated monomers. For example, the internal crosslinking agent may be used in an amount of 0.01 parts by weight or more, or 0.05 parts by weight or more, or 0.1 parts by weight or more, and 5 parts by weight or less, or 3 parts by weight or less, or 2 parts by weight or less, or 1 part by weight or less, or 0.7 parts by weight or less, based on 100 parts by weight of the water soluble ethylenically unsaturated monomers. If the content of the internal crosslinking agent is too low, crosslinking may not sufficiently occur, and thus, it may be difficult to realize strength above an optimum level, and if the content of the internal crosslinking agent is too high, the internal crosslinking density may increase, and thus, it may be difficult to realize desired centrifuge retention capacity.

The polymer formed using such an internal crosslinking agent has a three-dimensional network structure in which main chains formed by polymerization of the water soluble ethylenically unsaturated monomers are crosslinked by the internal crosslinking agent. As such, in case polymer has a three-dimensional network structure, compared to a two-dimensional linear structure that is not additionally crosslinked by an internal crosslinking agent, the properties of super absorbent polymer such as centrifuge retention capacity and absorbency under pressure may be remarkably improved.

According to one embodiment of the invention, the step of conducting polymerization of the monomer composition to form polymer may be conducted in a batch type reactor.

In the common preparation method of super absorbent polymer, the polymerization method is largely divided into thermal polymerization and photopolymerization according to polymerization energy source, and commonly, thermal polymerization may be progressed in a reactor equipped with a stirring axis such as a kneader, and photopolymerization may be progressed in a reactor equipped with a movable conveyor belt or in a flat-bottom container.

Meanwhile, by such a polymerization method, generally, polymer having modest molecular weight and wide molecular weight distribution is formed according to short polymerization reaction time (for example, 1 hour or less).

Meanwhile, in case photopolymerization is progressed in a reactor equipped with a movable conveyor belt or in a flat bottom container, hydrogel polymer sheet having a width of the belt is commonly obtained, and the thickness of the polymer sheet may vary according to the concentration of introduced monomer composition and introduction speed or introduction amount, but commonly, it may be about 0.5 to about 5cm.

However, in case the monomer composition is supplied such that the thickness of the polymer sheet becomes too thin, production efficiency may be low, and in case the thickness of polymer sheet is increased for productivity, a polymerization reaction may not uniformly occur over the whole thickness, and thus, it may be difficult to form high quality polymer.

And, since polymerization in the reactor equipped with a stirring axis and conveyor belt is continuously progressed while polymerization product moves and new monomer composition is fed to the reactor, polymers having different polymerization rates may be mixed, and thus, polymerization may not uniformly occur over the whole monomer composition, thus causing property deterioration.

However, according to one embodiment of the invention, by progressing fixed-bed type polymerization in a batch type reactor, there is little concern about mixing of polymers having different polymerization rates, and thus, polymer having uniform quality may be obtained.

And, the polymerization step is conducted in a batch type reactor having a predetermined volume, and a polymerization reaction is conducted for a longer time than the case of conducting continuous polymerization in a reactor equipped with a conveyor belt, for example, for 6 hours or more. Despite the long polymerization reaction time, since polymerization is conducted for non-neutralized water soluble ethylenically unsaturated monomers, even if polymerization is conducted for a long time, monomers may not be easily extracted, thus favorable for polymerization for a long time.

Meanwhile, the polymerization in a batch type reactor of the invention uses thermal polymerization, and thus, uses a thermal polymerization initiator as the polymerization initiator.

As the thermal polymerization initiator, one or more selected from the group consisting of persulfate-based initiators, azo-based initiators, hydrogen peroxide and ascorbic acid may be used. Specifically, as the examples of the persulfate-based initiators, sodium persulfate (Na₂S₂O₈), potassium persulfate (K₂S₂O₈), ammonium persulfate ((NH₄)₂S₂O₈), and the like, may be mentioned, and as the examples of the azo-based initiators, 2,2-azobis(2-amidinopropane) dihydrochloride, 2,2-azobis-(N,N-dimethylene)isobutyramidine dihydrochloride, 2-(carbamoylazo)isobutylonitrile, 2,2-azobis[2-(2-imidazolin-2-yl)propane] dihydrochloride, 4,4-azobis-(4-cyanovaleric acid), and the like may be mentioned. More various thermal polymerization initiators are stated in Odian, 'Principle of polymerization (Wiley, 1981)', p203, but the invention is not limited thereto.

Such a polymerization initiator may be used in an amount of 2 parts by weight or less, based on 100 parts by weight of the water soluble ethylenically unsaturated monomers. Namely, if the concentration of the polymerization initiator is too low, polymerization speed may become slow, and remaining monomers may be extracted in large quantities in the final product. To the contrary, if the concentration of the polymerization initiator is too high, polymer chains making up a network may become short, and thus, extractable contents may increase, and absorbency under pressure may decrease, thus deteriorating properties of polymer.

Meanwhile, according to one embodiment of the invention, polymerization may be initiated by introducing the initiator together with a reducing agent forming a redox couple with the initiator.

Specifically, the initiator and reducing agent, when introduced in a polymerization solution, react with each other to form radicals.

The radicals formed react with monomers, and since the oxidation-reduction reaction between the initiator and reducing agent is highly reactive, even if small amounts of initiator and reducing agent are introduced, polymerization may be initiated, thus enabling low temperature polymerization without need to increase process temperature, and minimizing property change of the polymer solution.

The polymerization using oxidation-reduction reaction may smoothly occur at a temperature around a room temperature (25°C) or lower temperature. For example, the polymerization reaction may be conducted at a temperature of 5°C or more and 25°C or less, or 5°C or more and 20°C or less.

In one embodiment of the invention, in case a persulfate-based initiator is used as the initiator, as the reducing agent, one or more selected from the group consisting of sodium metabisulfite (NagSgOs); tetramethyl ethylenediamine (TMEDA); a mixture of iron sulfate(II) and EDTA (FeSO₄/EDTA); sodium formaldehyde sulfoxylate; and disodium 2-hydroxy-2-sulfinoacteate may be used.

For example, potassium persulfate may be used as the initiator, and disodium 2-hydroxy-2-sulfinoacetate may be used as the reducing agent; ammonium persulfate may be used as the initiator, and tetramethyl ethylenediamine may be used as the reducing agent; or sodium persulfate may be used as the initiator, and sodium formaldehyde sulfoxylate may be used as the reducing agent.

In another embodiment of the invention, in case a hydrogen peroxide-based initiator is used as the initiator, the reducing agent may be one or more selected from the group consisting of ascorbic acid; sucrose; sodium sulfite (Na₂SO₃) sodium metabisulfite (Na₂S₂O₅); tetramethyl ethylenediamine (TMEDA); a mixture of iron sulfate(II) and EDTA (FeSO₄/EDTA); sodium formaldehyde sulfoxylate; disodium 2-hydroxy-2-sulfinoacteate; and disodium 2-hydroxy-2-sulfoacteate.

Besides, the monomer composition may further comprise additives such as a thickener, a plasticizer, a preservative, an antioxidant, and the like, as necessary.

And, the monomer composition comprising the monomers may be in the form of a solution dissolved in a solvent such as water, and the solid content in the monomer composition solution, i.e., the concentration of monomers, internal crosslinking agent and polymerization initiator may be appropriately controlled considering polymerization and reaction conditions, and the like. For example, solid content in the monomer composition may be 10 to 80 wt%, or 15 to 60 wt%, or 30 to 50 wt%.

Wherein, a solvent that can be used is not limited as long as it can dissolve the above explained components, and for example, water, ethanol, ethyleneglycol, diethyleneglycol, triethyleneglycol, 1,4-butanediol, propyleneglycol, ethyleneglycol monobutyl ether, propyleneglycol monomethyl ether, propyleneglycol monomethyl ether acetate, methylethylketone, acetone, methylamylketone, cyclohexanone, cyclopentanone, diethyleneglycol monomethyl ether, diethyleneglycol ethyl ether, toluene, xylene, butyrolactone, carbitol, methyl celosolve acetate and N,N-dimethylacetamide or mixtures thereof may be used.

Polymer obtained by such a method may have high molecular weight and uniform molecular weight distribution, and reduced extractable contents, because polymerization is conducted using non-neutralized ethylenically unsaturated monomers,

Polymer obtained by such a method may have a moisture content of 30 to 80 wt%. For example, the moisture content of the polymer may be 30 wt% or more, or 45 wt% or more, or 50 wt% or more, and 80 wt% or less, or 70 wt% or less, or 60 wt% or less.

If the moisture content of polymer is too low, it may be difficult to secure appropriate surface area in the subsequent grinding step, and thus, the polymer may not be effectively ground, and if the moisture content of polymer is too high, pressure applied in the subsequent grinding step may increase, and thus, it may be difficult to grind to a desired particle size.

Meanwhile, throughout the specification, a "moisture content" is the content of moisture occupied, based on the total polymer weight, and it means a value obtained by subtracting the weight of dried polymer from the weight of polymer. Specifically, it is calculated by measuring weight decrease according to evaporation of moisture in the polymer while increasing the temperature of polymer in the state of crumb to dry through infrared heating. Wherein, a temperature is increased from a room temperature to about 180°C, and then, maintained at 180°C, and the total drying time is set to 40 minutes including 5 minutes of the temperature rise step.

Next, a step of neutralizing at least a part of the acid groups of the polymer (step 2) is conducted.

Wherein, as the neutralization agent, basic material such as sodium hydroxide, potassium hydroxide, ammonium hydroxide, and the like, capable of neutralizing acid groups may be used.

And, a neutralization degree, referring to a degree to which the acid groups included in the polymer are neutralized by the neutralization agent, may be 50 to 90 mol%, or, 60 to 85 mol%, or 65 to 85 mol%, or 65 to 75 mol%. The range of the neutralization degree may vary according to the final properties, but if the neutralization degree is too high, absorption capability of super absorbent polymer may decrease, and due to excessively low concentration of carboxylic groups on the surface of particles, it may be difficult to sufficiently conduct surface crosslinking in the subsequent process, and thus, absorbency under pressure or permeability may decrease. To the contrary, if the neutralization degree is too low, absorption force of polymer may significantly decrease, and the polymer may exhibit rubber-like property which is difficult to handle.

Simultaneously with the step 2, or before or after conducting the step 2, a step of micronizing the polymer in the presence of a surfactant to prepare hydrated super absorbent polymer (step 3) is conducted.

This step is a step of micronizing the polymer in the presence of a surfactant, wherein the polymer is not chopped to millimeter size, but finely cut to tens to hundreds of micrometers and simultaneously aggregated. Namely, by giving appropriate adhesion to polymer, secondary aggregated particles in which primary particles finely cut to tens to hundreds of micrometer size are aggregated, are prepared. The secondary aggregated particles prepared by such a step, i.e., hydrated super absorbent polymer particles, have normal particle size distribution, but have significantly increased surface area, and thus, have remarkably improved vortex time.

As such, after mixing the polymer with a surfactant, by micronizing the polymer in the presence of the surfactant, hydrated super absorbent polymer particles in the form of secondary aggregated particles formed by fine cutting and aggregation while super absorbent polymer particles and surfactant are mixed, may be prepared.

Wherein, "hydrated super absorbent polymer particles" refer to particles having moisture content of about 30 wt% or more, and since it is formed by fine cutting and aggregation of polymer to particles without a drying process, it may have a moisture content of 30 to 80 wt% like the polymer.

According to one embodiment of the invention, the surfactant may be one or more selected from the group consisting of compounds represented by the Chemical Formula 2 and salts thereof, but not limited thereto. 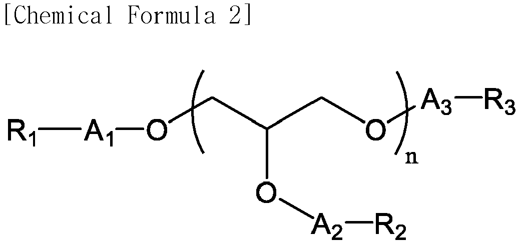 in the Chemical Formula 2,
A₁, A₂ and A₃ are each independently, a single bond, carbonyl, 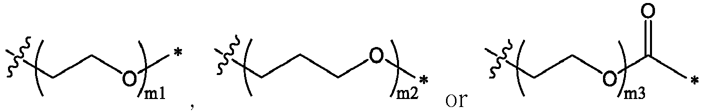 , provided that one or more of them are carbonyl or 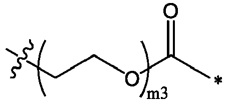 , wherein m1, m2 and m3 are each independently, n integer of 1 to 8, each 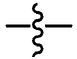 is connected to adjacent oxygen atom, and each 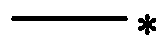 is connected to adjacent R₁, R₂ and R₃,
R₁, R₂ and R₃ are each independently, hydrogen, C6-18 linear or branched alkyl or C6-18 linear or branched alkenyl, and
n is an integer of 1 to 9.

The surfactant is mixed with polymer and added such that the micronization step may be easily conducted without aggregation.

The surfactant represented by the Chemical Formula 2 is a non-ionic surfactant, and has excellent surface adsorption capability even with non-neutralized polymer by hydrogen bonding force, and thus, is suitable for realization of aimed aggregation control effect. To the contrary, in the case of anionic surfactant, if it is mixed with polymer neutralized with a neutralization agent such as NaOH, Na₂SO₄, and the like, it may be adsorbed by Na+ ions to the carboxylic group substituent of polymer, and if it is mixed with non-neutralized polymer, due to competition of the carboxylic group substituent of polymer with anion, adsorption efficiency to polymer may be relatively degraded.

Specifically, in the surfactant represented by the Chemical Formula 2, hydrophobic functional groups are end functional groups R₁, R₂, R₃ (if not hydrogen), and hydrophilic functional groups include a part derived from glycerol in the chain, and hydroxyl groups at the end (in case Aₙ is a single bond, and simultaneously, Rₙ is hydrogen, n=1~3), wherein the glycerol-derived part and the end hydroxyl groups are hydrophilic functional groups and perform a function for improving adsorption capability to polymer surface. Thus, aggregation of super absorbent polymer particles may be effectively inhibited.

In the Chemical Formula 2, hydrophobic functional groups R₁, R₂, R₃ (if not hydrogen) are each independently, C6-18 linear or branched alkyl or C6-18 linear or branched alkenyl. Wherein, in case R₁, R₂, R₃ (not hydrogen) are alkyl or alkenyl having a carbon number less than 6, due to short chain length, aggregation of ground particles may not be effectively controlled, and in case R₁, R₂, R₃ (not hydrogen) are alkyl or alkenyl having a carbon number greater than 18, mobility of the surfactant may decrease, and thus, it may not be effectively mixed with polymer, and due to increase in surfactant cost, the unit cost of a composition may increase.

Preferably, R₁, R₂, R₃ may be hydrogen, or in case it is C6-18 linear or branched alkyl, it may be 2-methylhexyl, n-heptyl, 2-methylheptyl, n-octyl, n-nonyl, n-decanyl, n-undecanyl, n-dodecanyl, n-tridecanyl, n-tetradecanyl, n-pentadecanyl, n-hexadecanyl, n-heptadecanyl, or n-octadecanyl, or in case it is C6-18 linear or branched alkenyl, it may be 2-hexenyl, 2-heptenyl, 2-octenyl, 2-nonenyl, 2-decenyl, 2-undecenyl, 2-dodecenyl, 2-tridecenyl, 2-tetradecenyl, 2-pentadecenyl, 2-hexadecenyl, 2-heptadecenyl, or 2-octadecenyl.

The surfactant may be selected from compounds represented by the following Chemical Formula 2-1 to Chemical Formula 2-14:

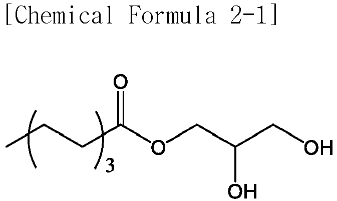

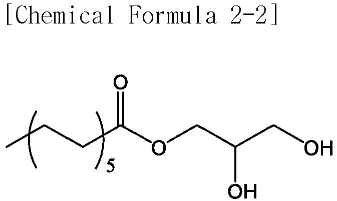

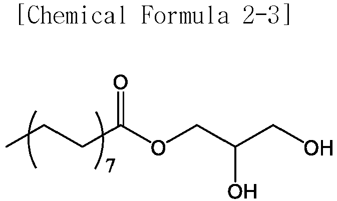

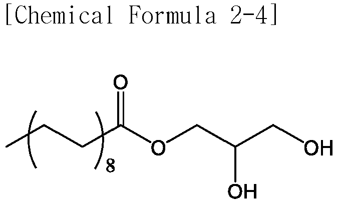

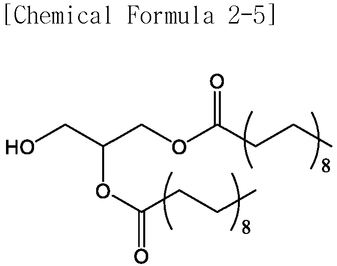

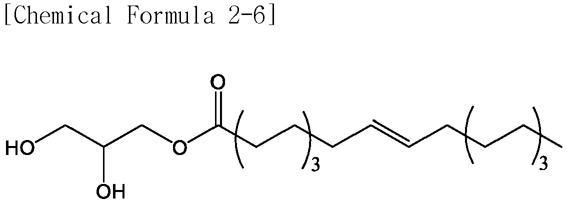

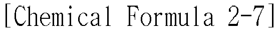

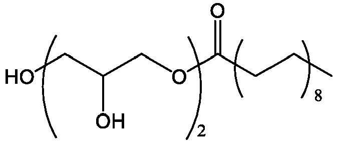

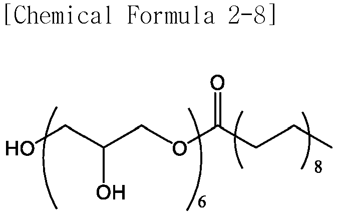

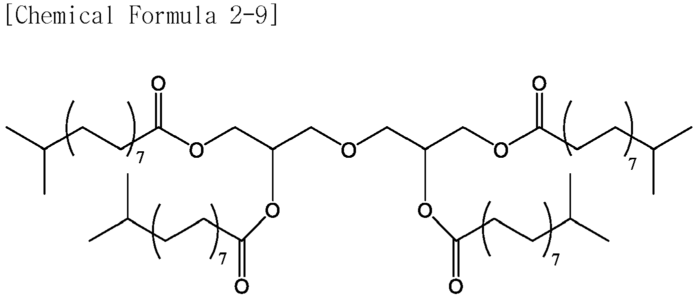

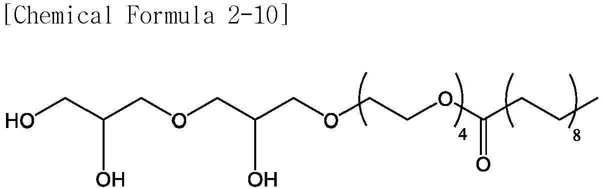

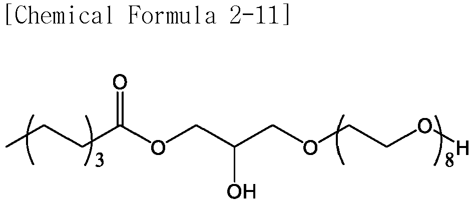

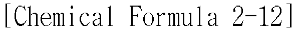

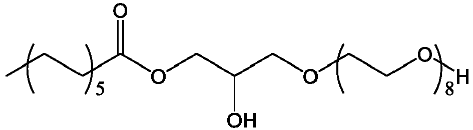

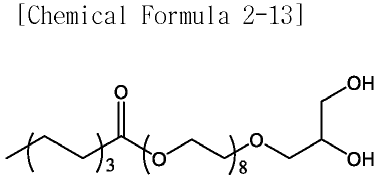

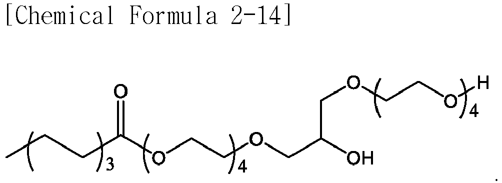

Meanwhile, the surfactant may be used in an amount of 0.01 to 10 parts by weight, based on 100 parts by weight of the polymer. If the amount of the surfactant used is too small, it may not be uniformly adsorbed on polymer surface, and thus, reaggregation of particles may be generated after grinding, and if the amount of the surfactant used is too large, the properties of the finally prepared super absorbent polymer may be deteriorated. For example, the surfactant may be used in an amount of 0.01 parts by weight or more, 0.015 parts by weight or more, or 0.1 parts by weight or more, and 5 parts by weight or less, 3 parts by weight or less, 2 parts by weight or less, or 1 part by weight or less, based on 100 parts by weight of the polymer.

A method for mixing such a surfactant with polymer is not specifically limited as long as it can uniformly mix them. Specifically, the surfactant may be dry mixed, or it may be dissolved in a solvent and then mixed in a solution state, or it may be molten and then mixed.

For example, the surfactant may be mixed in the state of a solution dissolved in a solvent. Wherein, as the solvent, inorganic solvents or organic solvents may be used without limitations, but considering easiness of a drying process and cost of solvent recovery system, water is most appropriate. And, the surfactant and polymer may be put in a reactor and mixed, or polymer may be put in a mixer and the solution may be sprayed, or polymer and the solution may be continuously supplied to a continuously operated mixer and mixed, and the like.

Meanwhile, according to one embodiment of the invention, the step of neutralizing at least a part of the acid groups of the polymer (step 2), and the step of micronizing the polymer in the presence of a surfactant, to prepare hydrated super absorbent polymer particles (step 3) may be sequentially, alternately or simultaneously conducted.

Namely, a neutralization agent may be introduced in polymer to neutralize the acid groups, and then, a surfactant may be introduced in the neutralized polymer and the polymer mixed with the surfactant may be micronized (conducted in the order of step 2 -> step 3); or a neutralization agent and a surfactant may be simultaneously introduced in polymer to conduct neutralization and micronization of polymer (simultaneously conducting step 2 and step 3). Alternatively, a surfactant may be introduced first, and a neutralization agent may be introduced later (conducted in the order of step 3 -> step 2). Alternatively, a neutralization agent and a surfactant may be alternately introduced. Alternatively, a surfactant may be introduced first for micronization, and then, a neutralization agent may be introduced for neutralization, and a surfactant may be additionally introduced in the neutralized hydrogel polymer to additionally conduct a micronization process.

Meanwhile, for uniform neutralization over the whole polymer, it may be preferable to set a regular time difference between the introduction of the neutralization agent and the micronization process.

At least a part or significant amount of the surfactant may exist on the surfaces of the hydrated super absorbent polymer particles.

Wherein, the description "the surfactant exists on the surfaces of hydrated super absorbent polymer particles" means that at least a part or significant amount of the surfactant is adsorbed or bonded to the surfaces of the hydrated super absorbent polymer particles. Specifically, the surfactant may be physically or chemically adsorbed to the surface of the super absorbent polymer. More specifically, the hydrophilic functional groups of the surfactant may be physically adsorbed to the hydrophilic parts of the super absorbent polymer surface by intermolecular force such as dipole-dipole interaction. As such, the hydrophilic parts of the surfactant are physically adsorbed to the surface of the super absorbent polymer particles to cover the surface, and the hydrophobic parts of the surfactant are not adsorbed to the surface of polymer particles, and thus, polymer particles may be coated with the surfactant in the form of a micelle structure. This is because the surfactant is not introduced during the polymerization process of the water soluble ethylenically unsaturated monomers, but introduced in the micronizatoin step after formation of polymer, and compared to the case wherein the surfactant is introduced during the polymerization process and exists inside the polymer, a function as a surfactant may be fully performed, and since grinding and aggregation simultaneously occur, particles having large surface area may be obtained in the form of aggregated fine particles.

According to one embodiment of the invention, the step of micronizing the polymer to prepare hydrated super absorbent polymer may be conducted two or more times.

According to one embodiment of the invention, the micronizing step is conducted by a micronizing apparatus explained below.

In case polymer mixed with the surfactant is micronized using a micronizing apparatus, smaller particle size distribution may be realized, and the subsequent drying and grinding processes may be conducted under milder conditions, and thus, generation of fine particles may be prevented, and the properties of super absorbent polymer may be improved.

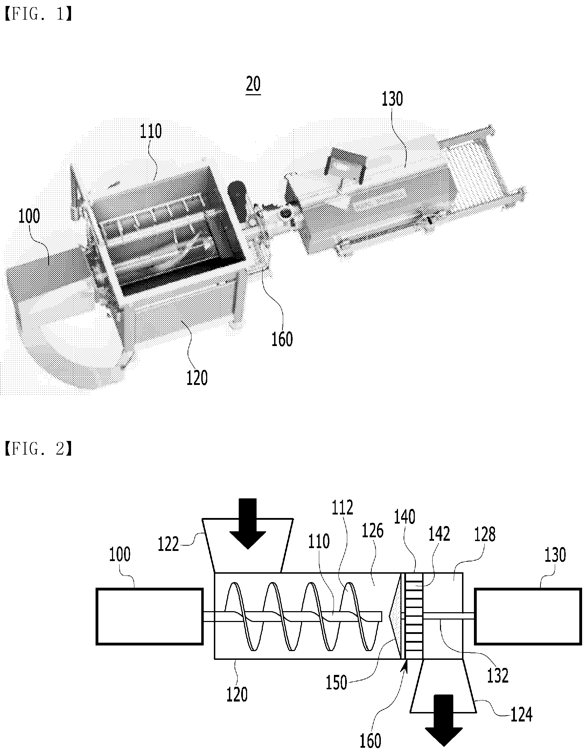

Hereinafter, referring to Figs. 1 and 2, the micronizing apparatus 20 for hydrogel of super absorbent polymer according to embodiment of the invention will be explained in more detail.

Fig. 1 is a perspective view of the micronizing apparatus for hydrogel of super absorbent polymer according to the embodiment of the invention, and Fig. 2 is a cross sectional view of the micronizing apparatus for hydrogel of super absorbent polymer according to the embodiment of the invention.

As shown in Fig. 1 and Fig. 2, the micronizing apparatus 20 for hydrogel of super absorbent polymer according to embodiment of the invention comprises a body 120, first and second driving motors 100 and 130, and a cutting part 160.

Inside the body 120, a transfer space 126 where hydrogel is transferred, and a discharge space 128 where ground hydrogel is discharged are formed. The transfer space 126 is formed at one side part in the longitudinal direction of the body 120, and the discharge space 128 is formed at the other side part in the longitudinal direction of the body 120, and between the transfer space 126 and discharge space 128, a cutting part 160 is disposed. Namely, the cutting part 160 may define a boundary between the transfer space 126 and discharge space 128.

At the upper part of one side of the body 120, an inlet 122 connected to the transfer space 126 is formed, and thus, hydrogel discharged from a polymerization reactor is introduced inside the body 120, i.e., transfer space 126 through the inlet 122. At the lower part of the other side of the body 120, an outlet 124 connected to the discharge space 128 is formed, and thus, hydrogel ground by the cutting part 160 is discharged outside the body 120 through the outlet 124.

In the transfer space 126 of the body 120, a first rotation shaft 110 is rotatably disposed, and in the discharge space 128 of the body 120, a second rotation shaft 132 is rotatably disposed. The first rotation shaft 110 and the second rotation shaft 132 may be disposed coaxially.

At one side of the body 120, a first driving motor 100 is disposed, and the first driving motor 100 is connected to the first rotation shaft 110. Namely, one end of the first rotation shaft 110 disposed in the transfer space 126 penetrates one side surface of the body 120 and is connected to the first driving motor 100. At the outer perimeter surface of the first rotation shaft 110, at least one screw 112 is formed. If the first driving motor 100 provides driving force to the first rotation shaft 110 and the first rotation shaft rotates, the screw 112 transfers hydrogel in the transfer space 126 to the other side in the longitudinal direction toward the cutting part 160 while rotating together with the first rotation shaft 110.

At the other side of the body 120, a second driving motor 130 is disposed, and the second driving motor 130 is connected to the second rotation shaft 132. Namely, the other end of the second rotation shaft disposed in the discharge space 128 penetrates the other side surface of the body 120 and is connected to the second driving motor 130.

One end of the second rotation shaft 132 is spaced from the other end of the first rotation shaft 110 in the longitudinal direction, and thus, the rotation of the first rotation shaft 110 and the rotation of the second rotation shaft 132 are independent from each other. Namely, the rotation speed of the first rotation shaft 110 by the first driving motor 100 may be controlled to be different from the rotation speed of the second rotation shaft 132 by the second driving motor 130.

The cutting part 160 grinds hydrogel transferred by the screw 112 and discharges it to the discharge space 128. The cutting part 160 comprises a hole plate 140 and a cutter 150.

The hole plate 140 is fixed to the body 120, and equipped with plural through holes 142 formed in the longitudinal direction.

The cutter 150 is disposed while being spaced from one side of the hole plate 140 by predetermined gap. The cutter 150 is equipped with plural cutter blades, and finely crushes hydrogel transferred by the screw 112 while rotating by the second driving motor 130. For this purpose, one end of the second rotation shaft 132 penetrates the hole plate 140 and join to the cutter 150.

Hydrogel crushed by the cutter 150 passes through plural through holes 142 of the hole plate 140 and is discharged to the discharge space 128, and then, discharged outside the body 120 through the outlet 124.

Hereinafter, the operation of the micronizing apparatus 20 according to embodiment of the invention will be explained.

If hydrogel discharged from a polymerization reactor is introduced in the transfer space 126 of the body 120 through the inlet 122, the first driving motor 100 is operated. Thereby, the first rotation shaft 110 and screw 112 transfer hydrogel toward the cutting part 160 while rotating. Wherein, the rotation speed of the first driving motor 100 may be referred to as the transfer speed of hydrogel.

And, when hydrogel is transferred toward the cutting part 160, the second driving motor 130 is operated. Thereby, the second rotation shaft 132 and cutter 150 rotate. Wherein, the rotation speed of the second driving motor 130 may be referred to as the discharge speed of hydrogel.

If hydrogel transferred by the screw 112 reaches the cutting part 160, it collides with the cutter 150 rotating by the second driving motor 130 and is ground to particles of small size. If the size of particles ground by the cutter 150 becomes smaller than the diameter of the through hole 142, the ground particles pass through the through holes 142 and are discharged to the discharge space 128, and then, discharged outside the body 120 through the outlet 124.

Meanwhile, since the rotation of the screw 112, namely, the transfer speed of hydrogel is controlled by the first driving motor 100, and the rotation of the cutter 150, namely, the discharge speed of hydrogel is controlled by the second driving motor 130, the transfer speed of hydrogel and the discharge speed of hydrogel may be independently controlled. Preferably, the transfer speed of hydrogel, i.e., the rotation speed of the first driving motor 100 may be relatively slow, and the discharge speed of hydrogel, i.e., the rotation speed of the second driving motor 130 may be relatively fast. That is, the rotation speed of the first driving motor 100 may be controlled to be slower than the rotation speed of the second driving motor 130.

For example, in order to make hydrogel particles smaller or increase sphericity of hydrogel particles, the number of collisions between the cutter 150 and hydrogel is increased by increasing the speed of the second driving motor 130. In this case, since the speed of the first driving motor 100 is not increased, the transfer speed of hydrogel is not increased, either. Thus, by controlling the discharge speed of hydrogel crushed in the cutting part 160 to be faster than the transfer speed of hydrogel to the cutting part 160, hydrogel is not accumulated in the cutting part 160. Thereby, hydrogel particles may be miniaturized while minimizing damage of hydrogel particles due to aggregation.

And, since hydrogel particles may be miniaturized, the subsequent grinding process may be omitted, and slowing of vortex may be prevented.

Although the example of the invention is illustrated as using two driving motors, the invention is not necessarily limited thereto. For example, one driving motor may be connected to the first rotation shaft 110 through a first direction change means having a first gear ratio, and connected to the second rotation shaft 132 through a second direction change means having a second gear ratio. In this case, the first, second gear ratios may be also set such that the rotation speed of the first rotation shaft 110 may be relatively slow and the rotation speed of the second rotation shaft 132 may be relatively fast.

And then, a step of drying the micronized hydrogel to prepare dried super absorbent polymer particles (step 4) is conducted.

In this step, the moisture of hydrated super absorbent polymer particles obtained by micronizing the polymer in the presence of a surfactant, at least a part of the acid groups of the polymer being neutralized, is dried.

In the common preparation method of super absorbent polymer, it is in general that the drying step is conducted until the moisture content of super absorbent polymer particles become less than 10 wt%, but according to one embodiment of the invention, drying is conducted such that the moisture content of super absorbent polymer becomes 10 wt% or more, for example, about 10 to about 20 wt%, or about 10 to about 15 wt%. However, the invention is not limited thereto.o

For this purpose, a temperature in a dryer used in the drying step may be about 150°C or less, for example, about 80°C to about 150°C, and the drying may be conducted at relatively low temperature. If the temperature in a dryer is too low, drying time may be too lengthened, and if the drying temperature is too high, super absorbent polymer having lower moisture content than the above desired moisture content may be obtained.

Wherein, drying may be conducted by moving type drying. Such moving type drying is distinguished from fixed-bed type drying according to whether material moves or not during drying.

The moving type drying refers to a method of drying while mechanically stirring a dried body. Wherein, a direction where hot air passes through material may be identical to or different from the circulation direction of the material. Alternatively, material may be circulated inside a dryer, and heat transfer fluid may be passed through a separate pipe outside the dryer to dry the material.

On the other hand, fixed-bed type drying refers to a method of drying wherein hot air passes through material from the top to the bottom, while material to be dried is stopped on a bottom such as a perforated steel plate through which air can pass.

Thus, it is preferable that hydrated super absorbent polymer is dried by moving type drying because uniform drying can be completed in a short time.

As an apparatus capable of moving type drying, a horizontal-type mixer, a rotary kiln, a paddle dryer, a steam tube dryer, or commonly used moving type dryers, and the like, may be used.

Next, a step of grinding the dried super absorbent polymer particles to prepare super absorbent polymer particles (step 5) is conducted.

Specifically, the grinding step may be conducted by grinding dried super absorbent polymer particles to a particle size of normal particle level, namely, particle diameter of 150 *µ*m to 850 *µ*m

A grinder used for this purpose may be specifically, a vertical pulverizer, a turbo cutter, a turbo grinder, a rotary cutter mill, a cutter mill, a disc mill, a shred crusher, a crusher, a chopper or a disc cutter, and the like, but is not limited thereto.

And, as a grinder, a pin mill, a hammer mill, a screw mill, a roll mill, a disc mill or a jog mill, and the like may be also used, but is not limited thereto.

Meanwhile, according to the preparation method of the invention, in the micronizing step, super absorbent polymer particles of smaller particle size distribution may be realized than in the conventional chopping step, and in case moving type drying is conducted, a moisture content after drying is 10 wt% or more, and maintained relatively high, and thus, even if grinding is conducted with smaller grinding force under mild conditions, super absorbent polymer having very high content of normal particles of 150 *µ*m to 850 *µ*m may be prepared, and the generation rate of fine particles may be significantly reduced.

The super absorbent polymer particles thus prepared may comprise super absorbent polymer particles having particle diameter of 150 *µ*m to 850 *µ*m, namely normal particles, in the content of 80 wt% or more, 85 wt% or more, 89 wt% or more, 90 wt% or more, 92 wt% or more, 93 wt% or more, 94 wt% or more, or 95 wt% or more, based on the total weight. The particle diameter of polymer particles may be measured according to European Disposables and Nonwovens Association (EDANA) standard EDANA WSP 220.3 method.

And, the super absorbent polymer particles may comprise fine particles having particle diameter less than 150 *µ*m, in the content of about 20 wt% or less, or about 18 wt% or less, or about 15 wt% or less, or about 13 wt% or less, or about 12 wt% or less, or about 11 wt% or less, or about 10 wt% or less, or about 9 wt% or less, or about 8 wt% or less, or about 5 wt% or less, based on the total weight. It is contrasting to super absorbent polymer prepared according to the conventional preparation method, having fine particle content of greater than about 20 wt% to about 30 wt%.

After the step of grinding the super absorbent polymer particles, a step of classifying the ground super absorbent polymer particles according to particle diameter may be further included.

And, after grinding and/or classifying the super absorbent polymer particles, a step of forming a surface crosslink layer on at least a part of the surfaces of the super absorbent polymer particles in the presence of a crosslinking agent may be further included. By the step, crosslinked polymer included in the super absorbent polymer particles is additionally crosslinked by a surface crosslinking agent, thus forming a surface crosslink layer on at least a part of the surfaces of the super absorbent polymer particles.

### Example 1

In a 2L glass container equipped with a stirrer and a thermometer, 100g of acrylic acid and 0.30g of pentaerythritol triallyl ether (P-30) internal crosslinking agent were introduced, and mixed with 226g of water while stirring. Wherein, the reaction temperature was maintained at 5°C, and to the resultant mixture, nitrogen was introduced at 1000c/min for 1 hour. And then, 1.3g of 0.3% hydrogen peroxide aqueous solution, 1.5g of 1% ascorbic acid aqueous solution, 3.0g of 2% 2,2' -azobis amidinopropane dihydrochloride aqueous solution, and 1.5g of 0.01% iron sulfate aqueous solution were added and mixed. After a polymerization reaction began in the resultant mixture and the temperature of the polymer reached 85°C, polymerization was conducted in an oven of 90±2°C for about 6 hours to prepare hydrogel polymer.

To the prepared hydrogel polymer, as a surfactant, glycerol monolaurate (GML) of the following structure was added in the form of an aqueous solution in high temperature water such that the amount became 0.3 parts by weight, based on 100 parts by weight of the hydrogel polymer, and then, the hydrogel polymer was micronized using a micronizing apparatus for hydrogel 20. The micronizing apparatus 20 for hydrogel comprised first and second driving motors 100 and 130 and a cutting part 160, the first driving motor 100 rotated a screw 112 to transfer obtained hydrogel polymer to the cutting part 160, and the second driving motor 130 rotated the cutter 150 of the cutting part 160 to micronize transferred hydrogel polymer. Wherein, the rotation speed of the first driving motor 100 was 30rpm, and the rotation speed of the second driving motor 130 was 2500rpm.

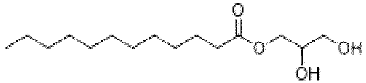

And then, to the micronized hydrated super absorbent polymer particles, 50% NaOH aqueous solution was added to neutralize a part of the acid groups of the polymer, and after introducing in a rotary mixer, the polymer was dried at 150°C while stirring at a speed of 100rpm for 60 minutes, to obtain super absorbent polymer particles (base resin).

### Example 2 and Example 3

Hydrogel polymer was obtained by the same method as Example 1, and the obtained hydrogel polymer was micronized with a micronizing apparatus for hydrogel 20, and then, dried to prepare super absorbent polymer.

However, in Example 2, the rotation speed of the first driving motor 100 was 70rpm, and the rotation speed of the second driving motor 130 was 3000rpm, and in Example 3, the rotation speed of the first driving motor 100 was 70rpm, and the rotation speed of the second driving motor 130 was 3300rpm

### Comparative Example 1

Hydrogel polymer was obtained by the same method as Example 1, and the obtained hydrogel polymer was micronized with the conventional chopper, and then, dried to prepare super absorbent polymer. Wherein, the chopper comprises a hole plate having plural through holes, and a cutter disposed in the vicinity of the hole plate, and the screw and cutter are connected to one motor and rotate at the same speed (for example, 150rpm).

### <Experimental Example>

The properties of the super absorbent polymers prepared in Examples were evaluated as follows, and the results were shown in Table 1.

Unless otherwise indicated, all the following property evaluations were progressed at constant temperature constant humidity (23±1°C, relative humidity 50±10%), and a physiological saline or brine means an aqueous solution of 0.9 wt% sodium chloride (NaCl).

And, otherwise indicated, property evaluations were conducted for polymers having particle diameter of 300,um ~ 400,um, classified with ASTM standard sieve.

### (1) Vortex time

A vortex time was measured as the unit of seconds, according to the method described in International Patent Publication No. 1987-003208.

Specifically, in 50 mL of physiological saline of 23°C to 24°C, 2g of super absorbent polymer (particle diameter 300 to 400*µ*m) was introduced, and stirred with a magnetic bar(diameter 8 mm, length 30 mm) at 600 rpm, and a time taken until vortex disappeared was measured as the unit of seconds, to calculate a vortex time.

### (2) Extractable Contents (wt%)

For 2g of super absorbent polymer, extractable contents after swelling for 1 hour was measured according to EDANA WSP 270.3 method.

The measurement results of vortex and extractable contents were described in the following Table 1.

**[Table 1]**

| | Comparative Example 1 | Example 1 | Example 2 | Example 3 |
|---|---|---|---|---|
| Vortex (Seconds) | 35 | 27 | 25 | 25 |
| Extractable contents (wt%) | 5.2 | 3.4 | 3.3 | 3.2 |

As shown in the Table 1, in Examples 1 to 3 wherein the first driving motor 100 connected to a screw and the second driving motor 130 connected to a cutter 150 rotated at different speeds, and the rotation speed of the second driving motor 130 was faster than the rotation speed of the first driving motor 100, vortex was 27 seconds or less, which was relatively small, and extractable contents was 3.4wt% and thus maintained relatively small.

To the contrary, in Comparative Example 1 using the conventional chopper in which a screw and a cutter rotated at the same speed, vortex was 35 seconds or more, which was relatively large, and extractable contents was 5.2 wt%, which was relatively large.

Although preferable examples of the invention have been explained, the invention is not limited to the examples, and includes all the modifications within a range easily modified from the examples of the invention by a person having ordinary knowledge in the art and recognized as being equivalent.

## Claims

1. A micronizing apparatus for hydrogel of super absorbent polymer comprising:
a body having a transfer space where hydrogel is transferred, and a discharge space where ground hydrogel is discharged formed inside the body;
a first rotation shaft rotatably disposed in the transfer space, wherein at least one screw is formed on an outer perimeter surface to transfer the hydrogel along a longitudinal direction of the body;
a hole plate fixedly installed in the body and having a plurality of through holes formed in the hole plate;
a cutter that is spaced from the hole plate by a predetermined gap, and is rotatably disposed in the body so as to grind the hydrogel transferred by the screw; and
a second rotation shaft that is rotatably disposed in the discharge space, and connected to the cutter to rotate the cutter,
wherein a rotation speed of the first rotation shaft and a rotation speed of the second rotation shaft are independently controlled.

2. The micronizing apparatus for hydrogel of super absorbent polymer according to claim 1, further comprising:
a first driving motor transferring driving force to the first rotation shaft; and
a second driving motor transferring driving force to the second rotation shaft.

3. The micronizing apparatus for hydrogel of super absorbent polymer according to claim 2, wherein the first driving motor is disposed at one side in the longitudinal direction of the body, and the first rotation shaft penetrates one side surface of the body and is connected to the first driving motor; and
the second driving motor is disposed at the other side in the longitudinal direction of the body, and the second rotation shaft penetrates the other side surface of the body and is connected to the second driving motor.

4. The micronizing apparatus for hydrogel of super absorbent polymer according to claim 1, wherein the cutter is disposed at one side in the longitudinal direction of the hole plate, and one end of the second rotation shaft penetrates the hole plate and is connected to the cutter.

5. The micronizing apparatus for hydrogel of super absorbent polymer according to claim 1, wherein the rotation speed of the second rotation shaft is faster than the rotation speed of the first rotation shaft.

6. The micronizing apparatus for hydrogel of super absorbent polymer according to claim 1, further comprising
an inlet that is formed at an upper part of one side in the longitudinal direction of the body, and connected to the transfer space, wherein the hydrogel is introduced into the inlet; and
an outlet that is formed at a lower part of the other side in the longitudinal direction of the body, and connected to the discharge space, wherein the hydrogel is discharged from the outlet.

7. The micronizing apparatus for hydrogel of super absorbent polymer according to claim 6, wherein the transfer space is formed at one side part in the longitudinal direction of the body, the discharge space is formed at the other side part in the longitudinal direction of the body, and the cutter and the hole plate define a boundary between the transfer space and the discharge space.
